(19) Europäisches Patentamt
European Patent Office
Office européen des brevets

(11) **EP 3 417 250 B1**

(12) **EUROPEAN PATENT SPECIFICATION**

(45) Date of publication and mention
of the grant of the patent:
**09.09.2020 Bulletin 2020/37**

(51) Int Cl.:
***G01F 1/84*** *(2006.01)*   ***G01F 15/00*** *(2006.01)*

(21) Application number: **17712557.2**

(22) Date of filing: **15.02.2017**

(86) International application number:
**PCT/NL2017/050090**

(87) International publication number:
**WO 2017/142403 (24.08.2017 Gazette 2017/34)**

(54) **SU-8 MICRO CORIOLIS MASS FLOW SENSOR**

SU-8-MIKRO-CORIOLIS-MASSENDURCHFLUSSSENSOR

MICRO-CAPTEUR DE DÉBIT MASSIQUE DE CORIOLIS À SU-8

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **15.02.2016  NL 2016265**

(43) Date of publication of application:
**26.12.2018 Bulletin 2018/52**

(73) Proprietors:
• **Universiteit Twente**
  **7522 NB  Enschede (NL)**
• **Universidad De Zaragoza**
  **50009 Zaragoza (ES)**

(72) Inventors:
• **WIEGERINK, Remco John**
  **7500 AE Enschede (NL)**
• **GROENESTEIJN, Jarno**
  **7500 AE Enschede (NL)**
• **LEDESMA, Luis José Fernandez**
  **50009 Zaragoza (ES)**
• **PRIETO, Rosa Monge**
  **50009 Zaragoza (ES)**
• **GARRIDO, Ignacio Ochoa**
  **50009 Zaragoza (ES)**

(74) Representative: **EDP Patent Attorneys B.V.**
  **Bronland 12-E**
  **6708 WH Wageningen (NL)**

(56) References cited:
  **US-A1- 2009 075 129**

• **R. VILARES ET AL: "Fabrication and testing of a SU-8 thermal flow sensor", SENSORS AND ACTUATORS B: CHEMICAL: INTERNATIONAL JOURNAL DEVOTED TO RESEARCH AND DEVELOPMENT OF PHYSICAL AND CHEMICAL TRANSDUCERS, vol. 147, no. 2, 3 June 2010 (2010-06-03), pages 411-417, XP055363656, NL ISSN: 0925-4005, DOI: 10.1016/j.snb.2010.03.054**
• **J. HANEVELD ET AL: "Micro Coriolis Mass Flow Sensor with Integrated Capacitive Readout", MICRO ELECTRO MECHANICAL SYSTEMS, 2009. MEMS 2009. IEEE 22ND INTERNATIONAL CONFERENCE ON, 1 January 2009 (2009-01-01), pages 463-466, XP055302694, Piscataway, NJ, USA DOI: 10.1109/MEMSYS.2009.4805419 ISBN: 978-1-4244-2977-6**
• **VÂNIA PINTO ET AL: "Optimized SU-8 Processing for Low-Cost Microstructures Fabrication without Cleanroom Facilities", MICROMACHINES, vol. 5, no. 3, 22 September 2014 (2014-09-22), pages 738-755, XP055363662, DOI: 10.3390/mi5030738**
• **GROENESTEIJN J ET AL: "Parametric amplification in a micro Coriolis mass flow sensor", JOURNAL OF APPLIED PHYSICS, AMERICAN INSTITUTE OF PHYSICS, US, vol. 115, no. 19, 21 May 2014 (2014-05-21), XP012185674, ISSN: 0021-8979, DOI: 10.1063/1.4876741 [retrieved on 1901-01-01]**
• **Silvan Schmid ET AL: "ALL-POLYMER MICROSTRING RESONANT HUMIDITY SENSOR WITH ENHANCED SENSITIVITY DUE TO CHANGE OF INTRINSIC STRESS", Proceedings of the EUROSENSORS XXII Conference, 1 January 2008 (2008-01-01), pages 697-700, XP055591127,**

## Description

FIELD OF THE INVENTION

The invention relates to a system comprising a Coriolis-type flow measuring device comprising a channel comprising device, use of such system, a method for measuring a property of a fluid using such system and a method for providing the flow measuring device.

BACKGROUND OF THE INVENTION

Coriolis mass flow sensors are known in the art. US2016363472, e.g, describes a Coriolis flow sensor comprising a housing and at least a Coriolis-tube with at least two ends being fixed in a tube fixation means. The flow sensor comprises excitation means for causing the tube to oscillate, as well as detection means for detecting at least a measure of displacements of parts of the tube during operation. According to the document, the Coriolis flow sensor comprises a reference mass, as well as further excitation means arranged for causing the reference mass to oscillate during operation, as well as further detection means for detecting at least a measure of displacements of the reference mass during operation. Additionally, control means are provided for controlling the excitation means and/or further excitation means based on vibrations measured by the detection means and/or further detection means. This way a Coriolis flow sensor with active vibration isolation is obtained.

SUMMARY OF THE INVENTION

Microfluidic Lab on a Chip (LOC), integrated microfluidic systems and micro total analysis systems ($\mu$-TAS) have gained an immense interest in the last years for many applications in different fields including (bio)chemistry, medicine and biology. Some of the goals are low cost, fast response, biocompatibility and a reduced use of reagents. Having a strong control over the fluids that are used during the experiments is essential: flow sensors are one of the key components for these types of devices.

Up to now, most known micro flow sensors have been based on a thermal measurement principle. These sensors can measure flows down to a few nl/min, however they are highly dependent on temperature and fluid properties, like density and specific heat. As a result, the fluid has to be known, and the sensor either needs to be calibrated for each fluid or the user needs to use conversion parameters to obtain the flow rate. Flow sensors using the Coriolis flow measuring principle directly measure the mass flow, independent of these parameters and thus need no recalibration or conversions and are capable of measuring flows of unknown or un-calibrated (mixtures of) fluids.

Commercially available (macro) Coriolis mass flow sensors in the relevant range are available, but suffer from large internal volume and are very expensive. Recently, silicon-based micro Coriolis mass flow sensors with internal volumes in the order of 10-20 nl and a small footprint have been developed successfully for different flow ranges. When designed for low flow applications, one of these sensors is capable of measuring up to 20ul/min with an accuracy of 20nl/min, while dedicated versions for higher flow ranges demonstrated to measure up to 300$\mu$l/min with an accuracy of 0.4$\mu$l/min. The high sensitivity reported is due to the excellent mechanical properties of silicon and silicon nitride and the extremely thin channel wall that can be realized, resulting in a high performance flow sensor. However, the fabrication process intrinsically involves silicon micromachining which makes the sensor expensive to produce and not suitable for applications where the device is going to be used only a few times, or where it is meant to be disposable (lab-on-a-chip, diagnostics, biomedical systems, etc.).

For instance, J. Hanelveld et al. (MEMS 2009, IEEE 22nd International conference on Micro Electro Mechanical Systems) and J. Groenesteijn et al. (Journal of applied Physics 115, 194503 (2014)) disclose micro Coriolis mass flow sensors with silicon nitride as the material for the vibrating tube wall.

Epoxy has also been considered to form Coriolis flow meters for microfluidic applications as disclosed in US20090075129.

It it is an objective of the invention to provide a system comprising a Coriolis-type flow measuring device comprising a channel comprising device and which also preferably at least partly obviates one or more of above-described drawbacks. Yet, it is also an aspect of the invention to provide a method for measuring a property of a fluid, specially using the system comprising the Coriolis-type flow masuring device. Yet, in further aspects the invention provides a method for providing the flow measuring system that at least partly obviates one or more of the above described drawbacks.

The scope of the invention is defined by the claims.

Herein, we present a micro Coriolis mass flow sensor fully fabricated in SU-8. Although SU-8 is certainly not an obvious choice for a resonant sensor because of the high damping due to intrinsic material losses, we have shown that it is still possible to use it for a micro Coriolis flow sensor. Trying to find a compromise between costs and accuracy, the micro SU-8 Coriolis mass flow sensor according to the invention benefits from the advantages of Coriolis type mass flow sensors (insensitivity to fluid parameters, flow profile, etc.), while reducing the fabrication costs. Moreover, SU-8 offers other interesting features such as transparency and biocompatibility. All these attractive properties make that the inventive low-cost biocompatible mass flow sensor may have a great potential in biomedical diagnostics and research.

Coriolis mass flow sensors may comprise a channel that is arranged in plane of the sensor. Especially, the channel is a continuous channel configured for a fluid flow entering the channel at channel inlet and exiting the channel at a channel outlet. The channel may for instance comprise a curved configuration or a loop configuration in between the channel inlet and the channel outlet. The channel inlet and the channel outlet may be arranged at a same side of the flow sensor. Yet in other embodiments, the channel inlet and the channel outlet may be arranged at opposite sides of the flow sensor.

Especially, the channel is configured to vibrate when a fluid flows through the channel. Especially, at least of a part of the channel may vibrate (relative to the remainder of the flow sensor). A vibration of the channel may be related to a mass flow of a fluid flowing through the channel (from the channel inlet to the channel outlet). A vibration may provide an angular velocity of at least a part of the channel. Especially, said part of the channel may also be referred herein as "tube".

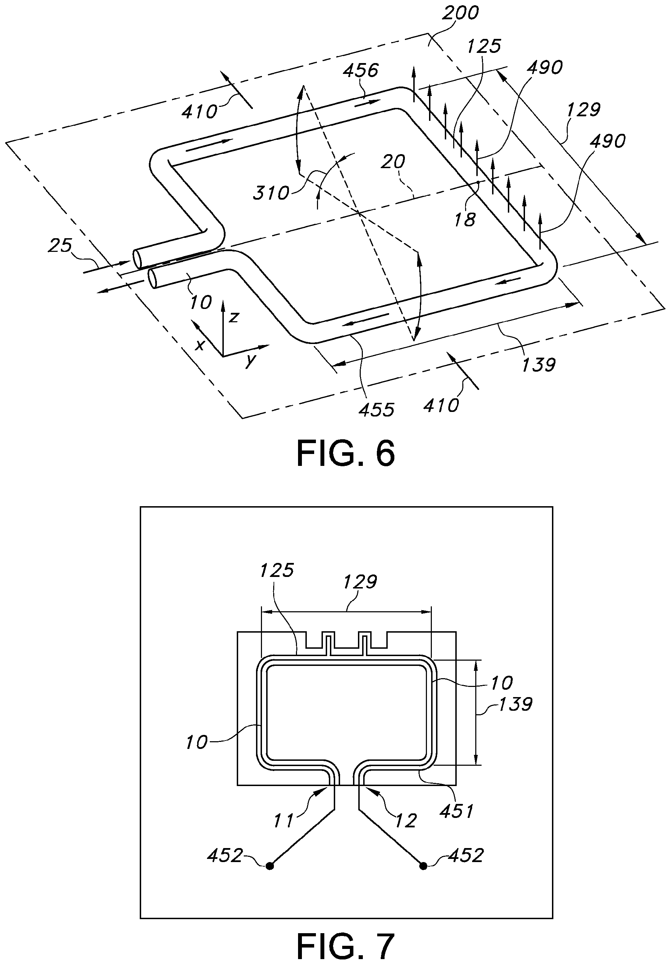

A mass flow ($\Phi_m$) through the channel will induce a Coriolis force ($F_c$) which is proportional to the mass flow through the channel and the angular velocity ($\omega_{am}$) of the tube (see Fig 6) according to $\overrightarrow{F_C} = -2L_x(\overrightarrow{\omega_{am}} \times \overrightarrow{\Phi_m}$. The resulting Coriolis force may induce an (out-of-plane) swing vibration mode, especially in a direction perpendicular to the plane of the sensor, especially orthogonal to the actuation mode, with an amplitude proportional to the mass flow.

Hence, in a first aspect, the invention comprises a channel comprising device comprising a channel with a channel wall, a channel inlet and a channel outlet, wherein the channel wall is made of a polymer.

According to the invention, the polymer is a polymer obtainable by a process using a photoresist, wherein the polymer is an epoxy based polymer, wherein the polymer is SU-8. According to the invention, at least part of the channel is configured flexible relative to a remainder of the channel comprising device.

In embodiments, the channel wall comprises a wall thickness, wherein the channel comprises a cross-sectional area, and the cross-sectional area is selected in the range of 100 $\mu$m$^2$ - 10 mm$^2$, especially the cross-sectional area is selected in the range 100 $\mu$m$^2$ - 1 mm$^2$, and even more especially the cross-sectional area is selected in the range 100 $\mu$m$^2$ - 0.1 mm$^2$, especially wherein the cross sectional area is selected from the group consisting of a round cross sectional area, a rectangular cross-sectional area and a square cross-sectional area, especially wherein the cross-sectional area comprises a substantial rectangular cross-sectional area, even more especially a square cross-sectional area.

In embodiments, the wall thickness is selected in the range of 1 - 500 $\mu$m, especially in the range of 1 - 100 $\mu$m, such as 1 - 50 $\mu$m, especially 1 - 10 $\mu$m. In further embodiments the wall thickness is selected in the range of 100 - 500 $\mu$m.

Especially, in embodiments the channel comprising device comprises a biocompatible (channel comprising) device.

According to the invention, the channel of the invention is applied in a Coriolis-type flow measuring device, especially in a disposable flow measuring device. According to the invention, the invention provides a system comprising a Coriolis-type flow measuring device comprising the channel comprising device described herein, and an actuation system configured to let at least part of the channel vibrate (especially relative to the remainder of the Coriolis-type flow measuring device), thereby especially causing temporary displacements (relative to a basic configuration of the at least part of the channel).

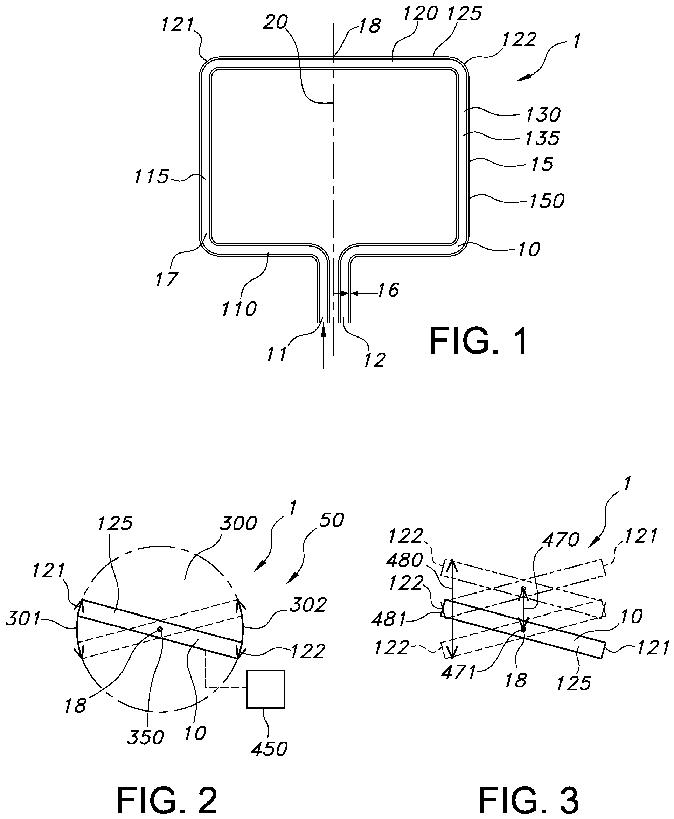

In embodiments, the channel wall comprises an electrical track configured to allow an alternating current to flow at the channel, wherein the flow measuring device further comprises a magnetic element configured to provide a magnetic field parallel to a plane comprising a channel axis, and wherein the actuation system comprises the electrical track and the magnetic element. Especially in such a system the channel may comprise a first channel part comprising the channel inlet, a second channel part, and a third channel part comprising the channel outlet, wherein the second channel part is in direct (fluidic) contact with the first channel part and (in direct - fluidic - contact) with the third channel part and especially at least part of the first channel part may be configured parallel to at least part of the third channel part, especially wherein at least part of the second channel part is configured perpendicular to said part of the first channel part and to said part of the third channel part. In embodiments, at least part of the first channel part and at least part of the third channel part are configured parallel, like schematically depicted in Fig. 1. However, these channel parts not necessarily are arranged parallel. Especially, part of the first channel part and part of the third channel part are flexible and especially part of the second channel part may move relatively to the first and the third part of the channel. Hence in embodiments, the system is provided, wherein the channel comprises a first channel part comprising the channel inlet, a second channel part, and a third channel part comprising the channel outlet, wherein the second channel part is in direct (fluidic) contact with the first channel part and with the third channel part, wherein at least part of the first channel part and at least part of the third channel part is flexible, and wherein the channel is configured to allow movement of (at least part of) the second channel part, especially relative to the channel inlet and the channel outlet. In further embodiments, especially at least part of the first channel part is configured parallel to at least part of the third channel part.

In further embodiments, the second channel part comprises a first extreme, a second extreme and a channel center, and the actuation system is configured to let at least part of the second channel part vibrate, wherein (respectively) the first extreme and the second extreme displace temporarily around (about) the channel center along respectively a first displacement path and a second displacement path, especially wherein a circumference of a circular plane (comprising the first and the second extreme and a center of the circular plane) comprises the first displacement path and the second displacement path. Especially, in such embodiment a line, perpendicular to the circular plane and comprising the center of the circular plane, comprises the channel center. Said line may comprise a rotational axis of the channel comprising device, especially a line about which the channel comprising device may rotate, especially as a result of the actuation system

In further embodiments, the system comprises a support comprising the Coriolis-type flow measuring device, and a fluidic connection configured to connect a fluid flow channel to the channel inlet. The support especially may comprise a printed circuit board ("PCB"). Alternatively or additionally, the support may comprise a plastic support.

In further embodiments, the system further comprises electrical connections, the magnetic element may especially comprise a permanent magnet, and the electrical connections may be configured to connect the electrical track to an electric source especially providing an alternating current.

The system described herein may especially comprise a fluidic device, even more especially a micro fluidic device.

The Coriolis-type flow measuring device described herein may especially be configured for measuring a property of a fluid in the (micro) fluidic device, especially wherein the property of the fluid is at least one property selected form the group consisting of a mass flow rate of the fluid and a density of the fluid. A flow through the (actuated) channel may induce a Coriolis force.

Especially, the property of the fluid may be determined from a displacement of (at least part of) the channel, especially (a displacement of at least part of the channel) at a first position at the channel, and (a displacement of at least part of the channel) at a second position at the channel, especially wherein the first position (at the channel) comprises the channel center and the second position (at the channel) comprises an extreme (the (first or second) extreme). In further embodiments, the system further comprises a displacement analyzer configured to analyze a displacement of said at least part of the channel, especially wherein the displacement analyzer is configured to analyze a displacement of the channel center and at least one of the (first and the second) extreme(s). Additionally or alternatively, the displacement analyzer may be configured to analyze a displacement (of said part of the channel) at (at least) two positions (at the part of the channel), especially (each) at a different distance relative to the channel center.

In embodiments, the displacement analyzer comprises at least one analyzer selected from the group consisting of an optical and a capacitive sensor.

In yet a further aspect, the invention also provides a method for measuring a property of a fluid *per se,* using a flow measuring system as described herein. Hence, the invention (further) provides a method for measuring a property of a fluid, especially wherein the property of the fluid is a property selected form the group consisting of a mass flow rate of the fluid and a density of the fluid, the method (for measuring a property of a fluid) comprising: providing a flow measuring system (as described herein); providing a flow of the fluid to the channel inlet of the flow measuring system, to provide a Coriolis force induced displacement of at least part of the channel; applying the actuation system (comprised by the flow measuring system) to provide an actuated displacement of at least part of the channel; and analyzing a displacement, especially the Coriolis force induced displacement and/or the actuated displacement, more especially the Coriolis force induced displacement and the actuated displacement, of said part of the channel to provide the property of the fluid. Especially the displacement at a location comprising the rotational axis (see further below) may not be provided by the Corolius force. Hence at a location comprising the rotational axis (only) the actuated displacement may be analyzed. At any location especially not comprising the rotational axis the actuated may be analyzed.

In embodiments, the method for measuring a property of a fluid (wherein the property of the fluid is a property selected form the group consisting of a mass flow rate of the fluid and a density of the fluid) comprises: (i) providing a flow measuring system as described herein, especially comprising a displacement analyzer; (ii) providing a flow of the fluid to the channel inlet of the flow measuring device and providing an alternating actuation current, comprising an alternating current frequency, to the electrical track of the flow measuring device, wherein the alternating current frequency especially is selected to provide a resonant frequency of the channel; (iii) applying the displacement analyzer, to determine a mid-point amplitude and an edge amplitude, wherein the mid-point amplitude being a maximum displacement of the second channel part at the first position at the channel, especially at the channel center, along a line parallel to the circular plane, and the edge amplitude being a maximum displacement of the second channel part at the second position of the channel, especially at an (the first or second) extreme, along a straight line parallel to the circular plane; and (iv) determining the property of the fluid on the basis of a ratio between the edge amplitude and the mid-point amplitude.

Hence, in embodiments, wherein the displacement analyzer is configured to analyze a displacement of at least part of the channel at a first position at the channel and a displacement of at least part of the channel at a second position a of the channel, the method comprises: (a) providing the flow of the fluid to the channel inlet of the flow measuring device and providing an alternating actuation current, comprising an alternating current frequency, to the electrical track of a the flow measuring device, wherein the alternating current frequency is selected to provide a resonant frequency of the channel; and (b) applying the displacement analyzer, to determine a mid-point amplitude and an edge amplitude, wherein the mid-point amplitude being a maximum displacement of the second channel part at the first position at the channel along a line parallel to the circular plane, and the edge amplitude being a maximum displacement of second channel part at the second position of the channel along a straight line parallel to the circular plane; and (c) determining the property of the fluid on the basis of a ratio between the edge amplitude and the mid-point amplitude.

According to a further aspect of the invention, the flow measuring system according to the invention is used for measuring a mass flow rate and/or a density of a fluid flowing through the channel, in biomedical diagnostics and/or intravenous therapy.

In a further aspect, the invention also provides a method for providing the flow measuring device described herein, (the method) comprising providing the polymer flow channel by lithography, wherein the channel comprising device is made of an epoxy based polymer wherein the polymer is SU-8 and (wherein) the method comprising SU-8 based technology.

In embodiments, the method for providing a flow measuring device comprises (i) providing a first layer comprising (at least) a (first) polymer on a first substrate; (ii) providing a pattern in the first layer by one or more photolithography steps; (iii) providing a second layer comprising at least a (second) polymer on a second substrate; (iv) providing a pattern in the second layer by photolithography; (v) aligning the patterned first layer and patterned second layer to provide a channel; (vi) bonding the aligned layers to each other; (vii) removing the first substrate and the second substrate from the bonded and aligned layers to provide a micro-device; and (viii) depositing metal on the micro-device, wherein an electrical track is provided at the channel. Especially in embodiments the first polymer and the second polymer may comprise the same polymer.

In embodiments, the method for providing a flow measuring device comprises providing a first layer comprising a (first) polymer; depositing a (continuous) patterned metal layer onto the first layer, providing a layer structure comprising a patterned conductive layer; and providing a third layer comprising a (second) polymer at the layer structure, wherein a channel is configured in the third layer, especially wherein the first polymer and the second polymer are the same polymer. Especially, in embodiments depositing the metal layer onto the first layer comprises one or more techniques selected from the group consisting of an evaporation deposition, a sputter deposition and a chemical vapor deposition, and especially a pattern of the patterned metal layer may be provided by (i) applying a mask during depositing the metal layer or (ii) by applying lithography or etching after depositing the metal layer.

BRIEF DESCRIPTION OF THE DRAWINGS

Embodiments of the invention will now be described, by way of example only, with reference to the accompanying schematic drawings in which corresponding reference symbols indicate corresponding parts, and in which:

Fig. 1 schematically depicts an embodiment of a channel comprising device of the invention;
Figs. 2 and 3 schematically depict some aspects of the channel comprising device and the method for measuring a property of a fluid;
Figs 4A-4C schematically depict some aspects of a channel according to the invention;
Fig. 5 schematically depicts some aspects of the system of the invention;
Fig.6 schematically depicts the operating principle of a Coriolis mass flow sensor actuated using Lorentz force;
Fig. 7 schematically depicts an (SU-8) Coriolis mass flow sensor chip design;
Figure 8 schematically depicts an SU-8 based microfluidic chip with the defined electrodes;
Fig. 9: schematically depicts a chip fabrication process comprising the system of the invention;
Fig. 10 schematically depicts a presentation of a fabricated chip mounted on a printed circuit board;
Fig. 11 schematically depicts a schematic overview of a measurement setup;
Fig. 12: shows a simulated and measured resonance frequency for different densities of the fluid inside the channel of an embodiment of the device;
Figs. 13 depict measured ratio between a mid-point amplitude and edge amplitude as a function of a volume flow (13A) and a mass flow (13B) for various fluids; and
Figs. 14 schematically depict some alternative configurations of the channel comprising device.

The schematic drawings are not necessarily to scale.

DETAILED DESCRIPTION OF THE EMBODIMENTS

Fig. 1 schematically depicts an embodiment of a channel comprising device 1 of the invention. The channel comprising device 1 comprises a channel 10 comprising a channel inlet 11, a channel outlet 12, and a channel wall 15. At least part of the channel 10 is configured flexible relative to a remainder of the channel comprising device 1.

The channel 10 comprises a first channel part 110 in direct (fluidic) contact with a second channel part 120, and a third channel part 130 also in direct (fluidic) contact with the second channel part 120. According to the invention, at least part of the first channel part 110 and at least part of the third channel part 130 are flexible. Especially, the first channel part 110 and the third channel part 130 comprise the channel inlet 11 and respectively the channel outlet 12. The channel 10 is especially configured to allow movement of the second channel part 120 relative to the channel inlet 11 and the channel outlet 12.

In the depicted embodiment, a part of the first channel part 110 is configured parallel to (at least) a part of the third channel part 130, and (at least part of) the second channel part 120, especially comprising a straight channel 125, is configured perpendicular to said parts of the first channel part 110 and the third channel part 130. The figure further depicts a first extreme 121, a second extreme 122, and the channel center 18 of the second channel part 120. In addition, a rotational axis 20 comprising the channel center 18 is depicted.

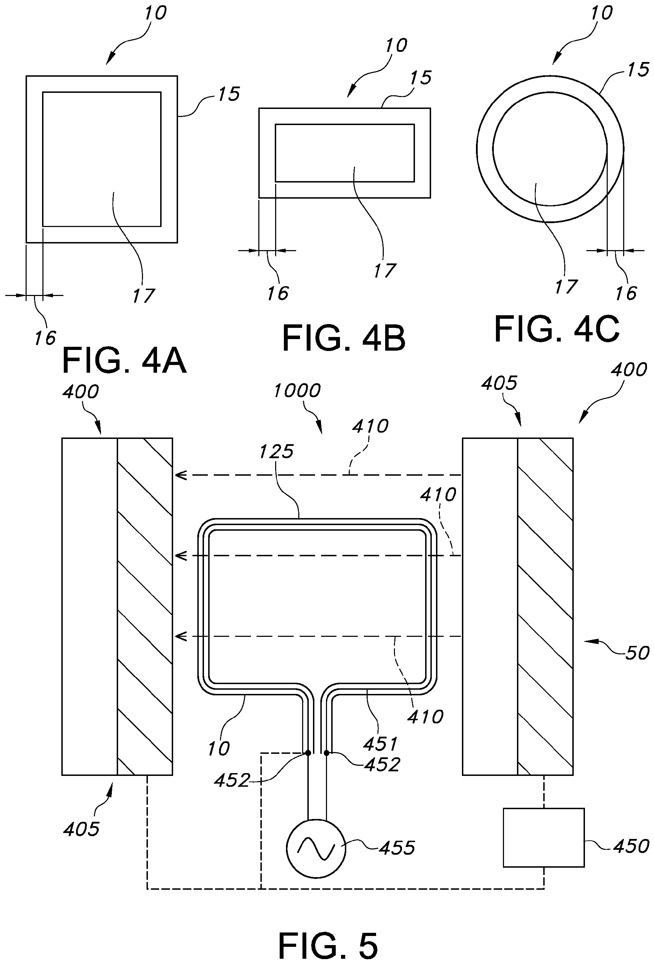

The channel wall 15 comprises a polymer 150. The polymer 150 (especially, the channel 10) is according to the invention, obtainable by a process using a photoresist. The polymer 150 is an epoxy based polymer, being, according to the invention, SU-8. The channel wall comprises a wall thickness 16, especially selected in the range of 1 - 500 $\mu$m. In embodiments, the channel 10 comprises a cross-sectional area 17 selected in the range of 100 $\mu$m$^2$ - 10 mm$^2$, especially 100 $\mu$m$^2$ - 1 mm$^2$. Such cross sectional area 17, may e.g. comprises a substantial circular cross-sectional area 17, or rectangular, such as square, cross-sectional area 17, see e.g. Figs. 4A, 4B, and 4C.

The channel comprising device 1 may comprise a biocompatible device. The channel comprising device is, according to the invention, used in a Coriolis-type flow measuring device 50. The invention provides a system 1000 comprising such Coriolis-type flow measuring device 50, and further comprising an actuation system 450 (such as a Lorentz actuator) configured to let at least part of the channel 10 vibrate, especially thereby causing temporary displacements of parts of the channel 10. A displacement (such as by the the Coriolus force, and especially by the actuation system 450) may be provided to at least a part of the second channel part 120. In Figs 2 and 3 schematically displacements of the channel 10, especially the straight channel 125, are depicted.

In Fig. 2 schematically a displacement is depicted, wherein the first extreme 121 and the second extreme 122 displace (especially rotate) temporarily about (around) the channel center 18. The displacement may be provided along a first displacement path 301 and a second displacement path 302 for the first extreme 121 and respectively the second extreme 122. These paths 301, 302 are comprised by a circumference of a circular plane 300. The circular plane 300, further, comprises a center 350 (of the circular plane). The center 350 may especially comprise the channel center 18. In embodiments, a line comprising the center 350 and arranged perpendicular to the circular plane 300 also comprises the channel center 18. Said line perpendicular to the circular plane 300 may comprise the rotational axis 20 (see Fig. 1).

In further embodiments see Figs. 5 and 6, the flow measuring device 50 further comprises a magnetic element 400 configured to provide a magnetic field 410 parallel to a plane 200 comprising a channel axis, especially the rotational axis 20. Such embodiments may advantageously be combined with embodiments wherein the channel wall 15 comprises an electrical track 451, especially configured to allow an alternating current 456 to flow at the channel 10. Hence, the actuation system 450 may comprise the electrical track 451 and the magnetic element 400. The embodiment in Fig. 5 further comprises electrical connections 452 configured to connect the electrical track 451 to an electric source 455 providing an alternating current. In the embodiment the magnetic element 400 comprises a permanent magnet 405, espcially two permanent magnets 405 (especially comprising a north and a south pole). In further embodiments, the magnetic element comprises an electromagnet.

By providing the alternating current ($i_a$) 456 to the electrical track 451 in a magnetic field ($B$) 410, the channel 10 may vibrate, providing the displacement, especially an actuated displacement, to part of the second channel part 120, especially the straight channel 125. As a result of a Coriolus force 490 ($F_C$) (see also Fig. 6), such displacement may comprise a rotation about the center 18. The displacement may comprise an angular velocity ($\omega_{am}$) 310. Especially a translation may be superimposed on the rotation, providing a displacement schematically depicted in Fig. 3. In the figure a maximum displacement 470 at a first position 471, especially comprising the channel center 18, and a displacement 480 at a second position 481, especially comprising the second extreme 122 are depicted. The first position 471 and or second position 481 not necessarily comprise respectively the center 18 and the second extereme 122. The second position 481 may also comprise the first extreme 121. Alternatively or additionally, the first position 471 and second position 481 may comprise other locations at the channel 10. Essentially, the first and the second position 471,481 do not comprise the same location. Especially, the first position 471 and the second position 481 are arranged at a different distance relative to the channel center 18.

Fig. 6 schematically shows the operation principle of a Coriolis mass flow sensor. An alternating actuation current ($i_a$) 456 will, in the presence of a constant magnetic field ($B$) 410 cause Lorentz forces ($F_L$) that will actuate the channel 10 in a torsional (twist) mode about the rotational axis 20 with an angular velocity ($\omega_{am}$) 310,

according to: $\overrightarrow{F_L} = L_y(\overrightarrow{i_a} \times \overrightarrow{B})$. A mass flow ($\Phi_m$) 25 through the channel 10 will induce a Coriolis force ($F_c$) 490 which is proportional to the mass flow 25 and the angular velocity ($\omega_{am}$) 310 of the channel according to

$\overrightarrow{F_C}$ = -2$L_x$($\overrightarrow{\omega_{am}} \times \overrightarrow{\Phi_m}$), wherein $L_x$ is especially a length 129 of a part of the second channel part 120, especially of the straight channel 125. The resulting Coriolis force induces an out-of-plane 200 swing vibration mode orthogonal to the actuation mode, with amplitude proportional to the mass flow 25.

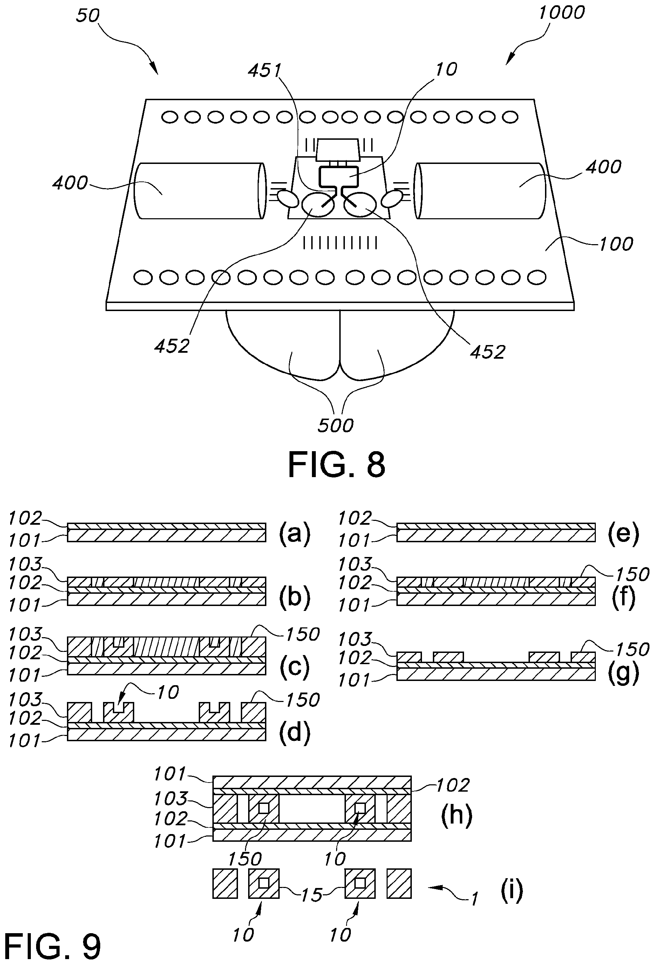

The system 1000 of the invention may comprises a micro fluidic device. In Fig. 7 schematically a Coriolis mass flow sensor chip design of a channel 10 comprising an electrical track 451 comprising electrical connections 452 is depicted. The design depicts an embodiment having a length 129 of the straight channel 125. Said length 129 is also rerefferd herein as "$L_x$". In the embodiment a part of the third channel part 130 and of the first channel part 110 are configured perpendicular to the straight channel over a second length ("$L_y$") 139. The chip design of Fig. 7 is used to provide the system 1000 depicted in Fig. 8. The depicted embodiment comprises a support 100, especially an electronic circuit board ("ECB"). The support 100 comprises the Coriolis-type flow measuring device 50. The support 100 further comprises a fluidic connection 500 configured to connect a fluid flow channel to the channel inlet 11. The system further comprises an actuation system 450 comprising two magnetic elements 400 and an electrical track 451. The electrical track 451 may be connected to an electric source 455 (not shown) via the electrical connections 452.

The Coriolis-type flow measuring device 50 is configured for measuring a property of a fluid in the micro fluidic device, such as a mass flow rate of the fluid or a density of the fluid.

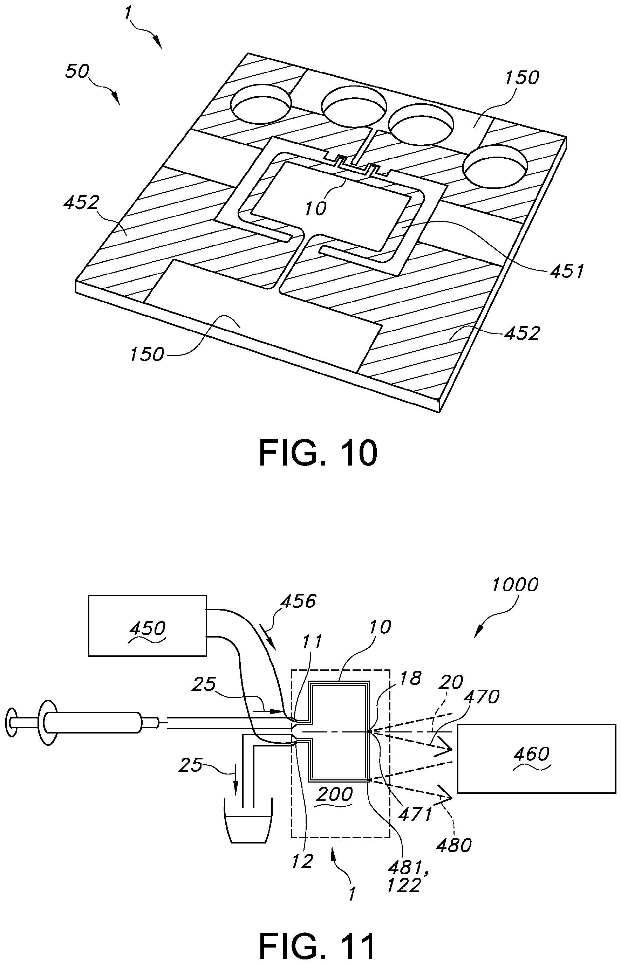

Fig. 11 schematically depicts an embodiment of the system further comprising a displacement analyzer 460. The displacement analyzer 460 is configured to analyze a displacement 470 of said at least part of the channel 10. The displacement analyzer 460 is configured to analyze a displacement 470 of at least part of the channel 10 at the first position 471 at the channel 10 and a displacement 480 of at least part of the channel 10 at a second position 481 a of the channel 10. In the figure, the first position 471 comprises the center 18 and the second position 481 comprises the second extreme 122. The displaments 470,480 are shematically indicated by the two arrows 470,480. The displacements 470,480 may especially comprise a displacement in the circular plane 300. In the given embodiment, the circular plane 300 may be arranged perpendicular to the rotational axis 20 and to the plane 200. Hence the displacements 470,480 in Fig. 11 may especially comprise an out-of-plane (out of the drawing) displacement. In embodiments the displacement analyzer 460 comprises an optical sensor. In further embodiments, the displacement analyzer 460 comprises a capacitive sensor.

The system 1000 is applied in the method of the invention for measuring a property of a fluid, such as a mass flow rate 25 of the fluid or a density of the fluid. In the method providing a flow of the fluid is provided to the channel inlet 11 of the flow measuring system 1000 to provide a Coriolis force induced displacement of at least part of the channel 10. Additionally, the actuation system 450 is applied to provide an actuated displacement of at least part of the channel 10 and the displacement, especially the Coriolis force induced displacement and/or the actuated displacement, the part of the channel 10 is analyzed, especially by the displacement analyzer 450, to provide the property of the fluid.

In embodiments, the method comprises providing an alternating actuation current, comprising an alternating current frequency, to the electrical track 451 of the flow measuring device 50. Especially the alternating current frequency is selected to provide a resonant frequency of the channel 10. The method, further comprises applying the displacement analyzer 460, to determine the displacements, especially a mid-point amplitude 470 and an edge amplitude 480, wherein the mid-point amplitude 470 is a maximum displacement of the second channel part 120 at the first position 471 at the channel 10 along a line parallel to the circular plane 300, and the edge amplitude 480 is a maximum displacement of second channel part 120 at the second position 481 of the channel 10 along a straight line parallel to the circular plane 300. The property of the fluid may then be determined on the basis of the ratio between the edge amplitude 470 and the mid-point amplitude 480.

The method, described herein for providing the flow measuring device 50, and (also) the channel comprising device 1 made of a polymer epoxy based polymer SU-8), flow channel 10, comprises providing the polymer flow channel 10 by lithography According to the invention, said method comprises SU-8 based technology, see e.g. Fig. 9.

Fig. 9 schematically depicts a chip fabrication process comprising the system 1000 of the invention; depicting the following stages: (a) kapton film 102 bonding to a pyrex wafer 101, (b) spinning of a 90 $\mu$m thick SU-8 layer 103 and definition, (c) spinning of the layer 103 and definition of microchannel 10, (d) development of ground and microchannel 10 layers, (e) kapton film 102 bonding to a pyrex wafer, 101 (f) spinning of a 90 $\mu$m thick SU-8 layer 103, and cover definition by photolitography, (g) cover development, (h) SU-8 to SU-8 bonding, (i) SU-8 device 1 release.

Especially, the method for providing a flow measuring device 50, may comprise the next (consecutive) stages: providing a first layer comprising at least a polymer 150 on a first substrate (see, e.g. Fig. 9 a-b), providing a pattern in the first layer by one or more photolithography steps (Fig. 9 c-d); providing a second layer comprising at least a polymer 150 on a second substrate (Fig. 9e); providing a pattern in the second layer by photolithography (Fig. 9f-g); aligning the patterned first layer and patterned second layer to provide a channel 10 (Fig. 9h); bonding the aligned layers to each other; removing the first substrate and the second substrate from the bonded and aligned layers to provide a micro-device (Fig.

9 i); and depositing metal on the micro-device, wherein an electrical track 451 is provided at the channel 10.

In other embodiments, the method for providing a flow measuring device 50 comprises the next (consecutive) stages: providing a first layer comprising a polymer 150; depositing a patterned metal layer onto the first layer, providing a layer structure comprising a patterned conductive layer, especially comprising an electrical track 451; and providing a third layer comprising a polymer 150 at the layer structure, wherein a channel 10 is configured in the third layer.

The metal layer may especially be deposited by an evaporation deposition and/or a sputter deposition, and/or a chemical vapor deposition. A pattern of the patterned metal layer may be provided by applying a mask during depositing the metal layer. Alternatively, said pattern may be provided by applying lithography or etching after depositing the metal layer.

A representation of a working chip comprising the channel comprising device 1 can be observed in Fig. 10.

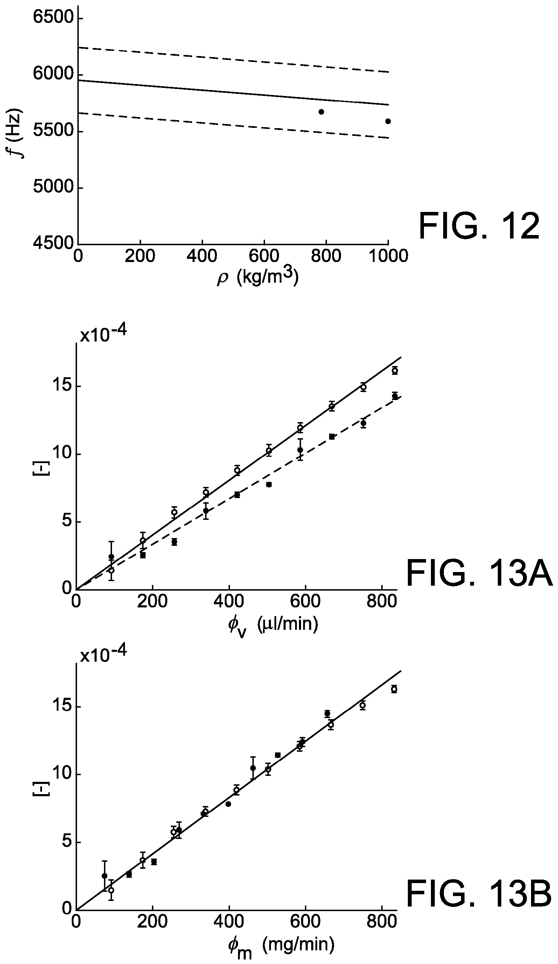

Fig. 12 shows a simulated and measured resonance frequency for different densities of the fluid inside the channel 10 of an embodiment of the device 50. In the figure, at the y-axis, the frequency $f$ in Hz is given as a function of the density of the fluid $\rho$ in kg/m$^3$ given at the x-axis. The two single points (values) represent the measured values, the continuous line represents the simulated values and the dotted lines indicate the simulated values plus or minus an error margin of 5%.

Figs. 13 depict measured ratio of the mid-point amplitude 470 over the edge amplitude 480 (at the y-axis) as a function of (at the x-axis) the volume flow ($\Phi_v$) in $\mu$l/min (Fig. 13A) or mass flow 25 ($\Phi_m$) in mg/min (Fig. 13B) for water and IPA (isopropyl alcohol). In the graphs, the open circles relate to water and the closed circles relate to IPA. The continuous line in Fig. 13B represents a linear fit for both fluids. In Fig. 13A the continuous line represents the linear fit for water, and the dotted line represents the linear fit for IPA.

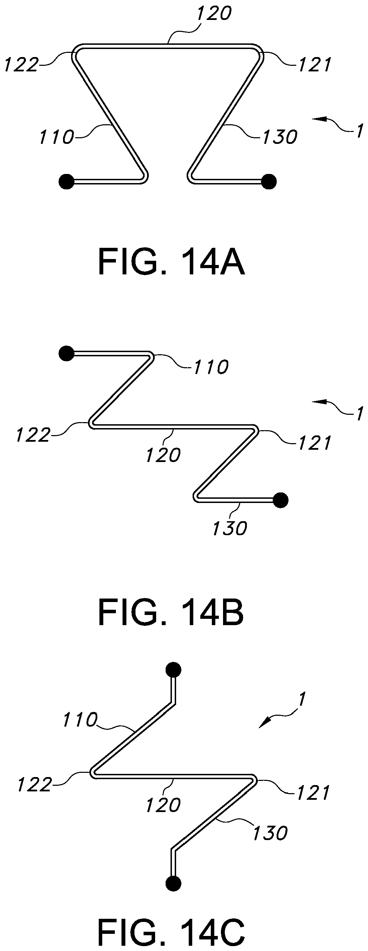

The invention described herein is not limited to a more or less rectangualr shaped chennels comrising device as depicted in most of the figures. The channel comprising device may also comprise another kind of configuration of Corolis type of mass flow meters known in the In Fig. 14 some further configuartions of the channel comprising device are depicted.

EXPERIMENTAL

Abstract

This work presents the modelling, design, fabrication and test of the first micro Coriolis mass flow sensor fully fabricated in SU-8 by photolithography processes. The sensor consists of a channel with rectangular cross-section with inner opening of 100$\mu$m x 100$\mu$m and is actuated at resonance by Lorentz forces. Metal tracks for the actuation current are deposited on top of the chip. The chip has been tested over a flow range of 0-800 $\mu$l/min with both water and isopropyl alcohol (IPA) to confirm that the sensor measures true mass flow.

Design

The basic sensor design has been adapted from the silicon-based micro Coriolis mass flow sensor presented in J. Haneveld et al, J. Micromech. Microeng., 2010, 20, 125001. Earlier, we presented a multi-axis flexible body mechanical model using the Matlab package SPACAR to model the mechanical behavior of the silicon micro Coriolis mass flow sensor (J. Groenesteijn et al., Thirteenth IEEE Sensors Conference, Nov. 3-5, 2014, pp. 954-957). This model has been adapted for the SU-8 sensor to include the possible channels shapes and the properties of SU-8 to predict the mechanical behavior of the polymer micro device. Taking into account the lower mechanical strength and rigidity of SU-8 and the reduced accuracy of the fabrication process with respect to silicon micromachining, the dimensions of the tube were adapted to compromise between sensor sensitivity and fabrication limitations. A final design of an embodiment wherein the first channel part and the third channel part are arranged parallel to each other is shown in Fig. 7. The new microfluidic chip includes a microchannel with a square internal cross-section of 100$\mu$m by 100$\mu$m, and channel walls of 100$\mu$m thick. Relatively thick channel walls compared to the channel diameter where chosen due to the limitations of the SU-8 processing. It is anticipated that improvements in fabrication technology will allow us to reduce the wall thickness to 20$\mu$m or less in the future. The channel window ($L_x$ 129 and $L_y$ 139 in Figs. 6 and 7) remained at 4mm x 2.5mm, while external dimensions were chosen to be 1cm x 1cm. Compared to the silicon-based sensor, the sensitivity will be reduced due to the increase of wall thickness and lower stiffness compared to silicon. However, the increased inner opening is expected to allow for a much higher mass flow for a given pressure drop across the sensor.

Fabrication

Fig. 9 shows an outline of the process flow that was used. The process starts with the temporary bonding of a thin Kapton film (125 $\mu$m) on top of a Pyrex substrate (Fig. 9a). Kapton was used because of its low adhesion to SU-8, allowing the easy releasing of the devices from the substrate when their fabrication is finished. Once the Kapton film was fixed to the substrate, a 60 $\mu$m thick SU-8-50 layer was deposited on top of it. After every spinning step, a soft-bake treatment was performed. All soft-bake steps were performed by heating the wafer up to 65° C for 30 minutes, followed by a cooling step down to room temperature. Then, another spinning of a 20 $\mu$m thick layer was performed followed by a new soft-bake step. As a result, a 90 $\mu$m thick layer was obtained. The increased thickness from the expected 80 $\mu$m was caused by the difference in surface friction: the first layer was spun on top of a Kapton film, while the second was spun over SU-8 material, increasing its expected thickness. Next, a 140 mJ/cm$^2$ exposure dose was used to pattern the first layer of the device using a 365nm wavelength lamp, followed by a post-bake step (Fig. 9b). Every post-bake step consists on heating the wafer up to 65° C for 15 minutes and cooling it down to room temperature. Then, two more SU-8 layers were spun (60$\mu$m and 20$\mu$m layer, respectively) and their corresponding soft-bakes were performed. An exposure of 140 mJ/cm$^2$ was then applied using the mask which defines the microchannel (Fig. 9c). Then, a post-bake was performed followed by a development step to remove the unexposed SU-8 material. The development consisted on an immersion of the wafer into a SU-8 developer for 5 minutes, followed by a rinsed in isopropanol, DI H$_2$O and a drying step using nitrogen (Fig. 9d). As a result, an open, freely suspended microchannel was fabricated. To close the microchannel another wafer was processed. First, a 90 $\mu$m thick SU-8 layer was processed (spun and soft-baked) on top of another Kapton film temporary bonded to a Pyrex wafer (Figs. 9e and 9f). Inlets and outlets were patterned by photolithography using the same exposure and baking parameters explained before. The wafer was finally developed (Fig. 9g). Then, both wafers (the bottom and the cover) were aligned and bonded to each other by applying a pressure of 1 bar and heating up to 90° C for 15 minutes (Fig. 9h). Finally, the bonded SU-8 devices were manually released from the Kapton thanks to its low adhesion (Fig. 9i). The final thickness of the device was sufficient to be rigid enough for its easy handling, even though there is no substrate.

Once the fully SU-8 micro device is finished, electrodes are added through a metal deposition at chip level. First of all, the device is exposes to ozone plasma to ensure good adhesion between the metal and the SU-8 surface. Then, the chips are sputtered with Cr (10nm) and Au (200nm) using a shadow mask to define the electrodes. A representation of a working chip can be observed in Fig. 10.

**Measurements**

Mechanical behavior

When changing the density of the fluid passing through the sensor, a change in its resonance frequency is also expected, as it modifies the total mass of the moving structure. Fig. 12 shows the simulated resonance frequency of the sensor for fluid densities of 0-1000kg/m$^3$. For SU-8, a Young's modulus of 4.4GPa and a density of 1233kg/m$^3$ were used. The measured resonance frequencies for water and iso-propyl alcohol (IPA) are shown in the figure as well and are within 2.5% of the simulated values, which can be explained by variations in the fabrication process. As a result, liquid density can be characterized by measuring the change in resonance frequency of the sensor. This can be especially relevant when using unknown mixtures of liquids, or chemically active substances which might change their density with time. By measuring the resonance frequency of the sensor, the flow sensor could also be used to measure the density of the fluid.

Due to the thick channel wall, the stiffness and mass of the tube will be higher than that of the silicon sensor. Furthermore, the quality factor will be lower due to the much higher material losses in SU-8. As a result, the vibration amplitude will be much lower at equal actuation current. Using a magnetic field strength at the electrical track on the tube of 0.1T and an actuation current of 20mA, the simulated vibration amplitude of the air-filled tube is 258nm and measured to be 239nm at the twist resonance frequency, compared to 54$\mu$m with an actuation current of 5mA for the silicon sensor. The modelled Coriolis displacement in the specified flow range will be lower by approximately 3 orders of magnitude, which is still well within the measurement accuracy of the used Polytec vibrometer.

Mass flow measurements

To facilitate mass flow readout using a SU-8 Coriolis sensor, a dedicated printed circuit board (PCB) with 3D printed fluidic connections was designed and fabricated. It allows straightforward fluidic and electrical connection, as well as an easy integration of permanent magnets as can be seen in Fig. 6. Once the sensor is mounted, a Harvard Apparatus PHD Ultra syringe pump is connected to the inlet to control the applied flow rate. The outlet was connected to a waste container.

To measure the mechanical displacement of the sensor induced by the Coriolis force, a Polytec MSA-400 laser Doppler vibrometer was used as shown schematically in Fig. 11. An alternating actuation current is applied to actuate the sensor at the twist mode resonant frequency. The amplitude of the vibration is measured at two points. The mid-point amplitude (denoted with "470") is the amplitude measured exactly on the rotational axis, where only the Coriolis induced amplitude is present and not the actuated amplitude. The edge amplitude (denoted with "480") is the actuated amplitude. The ratio between these amplitudes is proportional to the Coriolis force and thus the mass flow.

Flow measurements have been performed using two liquids with different density: water and IPA. Results are shown in Figs. 13, where the reading of the sensor is plotted as a function of the applied flow rate by the syringe pump. A linear relation is observed for both liquids over a range of hundreds of microliters per minute (Fig. 13a). While both liquids appear to respond with a different slope, once the readout is converted to mass per unit of time, both plots are coincident (Fig. 13b), showing the clear advantage of using a Coriolis based flow sensor.

## Discussion

The current measurement setup uses a Polytec MSA-400 laser Doppler vibrometer both for actuation and read-out. The sensors resonance frequency is found by applying a frequency sweep and measuring the edge displacement when there is no flow and then actuating the sensor at the frequency with the highest response. For each flow measurement, the edge displacement and midpoint displacement are measured separately and then divided to get the ratio between actuation and Coriolis mode amplitude. These measurements are based on three assumptions: the resonance frequency does not change during measurements; the amplitude of each point remains constant while the other point is measured and the rotational axis does not change during the measurements.

## Conclusions

We have successfully modelled, fabricated and tested a micro Coriolis mass flow sensor fully fabricated in SU-8. The sensor consists of a rectangular loop channel of 4mm x 2.5mm with a square cross section of 300μm x 300μm and a channel wall thickness of 100μm. The sensor design was based on the results of a multi-axis flexible body model in Matlab and the measured resonance frequency of the actuation mode was within 2.5% of the modelled value for two different fluids. The sensor was actuated in a resonance mode by Lorentz force actuation and read out using a laser Doppler vibrometer. The sensor showed a linear response up to 800μl/min. Measurements with two liquids with different densities and viscosities resulted in the same mass-flow sensitivities, showing the true mass-flow sensing principle of a flow sensor of the Coriolis type.

Although the material properties of SU-8 may seem far less favourable for resonant sensors than e.g. silicon or silicon nitride, we have shown that it is possible to use it for fabrication of a micro Coriolis mass flow sensor, resulting in a low-cost, biocompatible sensor. Future work may focus on reducing the wall thickness to channel diameter ratio, which is currently limited by the SU-8 fabrication technology. Furthermore, optical or capacitive readout structures may be integrated on-chip, to eliminate the need for a separate vibrometer setup.

Furthermore, the terms first, second, third and the like in the description and in the claims, are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

The devices herein are amongst others described during operation. As will be clear to the person skilled in the art, the invention is not limited to methods of operation or devices in operation.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. Use of the verb "to comprise" and its conjugations does not exclude the presence of elements or steps other than those stated in a claim. The article "a" or "an" preceding an element does not exclude the presence of a plurality of such elements. The invention may be implemented by means of hardware comprising several distinct elements, and by means of a suitably programmed computer. In the device claim enumerating several means, several of these means may be embodied by one and the same item of hardware. The mere fact that certain measures are recited in mutually different dependent claims does not indicate that a combination of these measures cannot be used to advantage.

The invention further applies to a device comprising one or more of the characterizing features described in the description and/or shown in the attached drawings. The invention further pertains to a method or process comprising one or more of the characterizing features described in the description and/or shown in the attached drawings.

The various aspects discussed in this patent can be combined in order to provide additional advantages. Further, the person skilled in the art will understand that embodiments can be combined, and that also more than two embodiments can be combined. Furthermore, some of the features can form the basis for one or more divisional applications.

## Claims

1. A system (1000) comprising a Coriolis-type flow measuring device (50) comprising (i) a channel comprising device (1) and (ii) an actuation system (450) configured to let at least part of a channel (10) vibrate thereby causing temporary displacements, wherein the channel comprising device (1) comprises the channel (10) with a channel wall (15), a channel inlet (11) and a channel outlet (12), wherein the channel wall is made of a polymer (150), wherein the polymer (150) is a polymer obtainable by a process using a photoresist, wherein at least part of the channel (10) is configured flexible relative to a remainder of the channel comprising device (1)
**characterised in that** the polymer (150) is an epoxy-based polymer and that the polymer (150) is SU-8.

2. The system (1000) according to claim 1, wherein the channel wall (15) comprises a wall thickness (16), the channel (10) comprises a cross-sectional area (17), wherein the cross-sectional area (17) is selected in the range of 100 $\mu$m$^2$ - 10 mm$^2$, especially 100 $\mu$m$^2$ - 1 mm$^2$, wherein the cross sectional area (17) comprises a substantial rectangular cross-sectional; area, especially a square cross-sectional area, wherein the wall thickness (16) is selected in the range of 1 - 500 $\mu$m.

3. The system (1000) according to claim any of the preceding claims, wherein the channel wall (15) comprises an electrical track (451) configured to allow an alternating current to flow at the channel (10), wherein the flow measuring device (50) further comprises a magnetic element (400) configured to provide a magnetic field (410) parallel to a plane (200) comprising a channel axis, and wherein the actuation system (450) comprises the electrical track (451) and the magnetic element (400), wherein the channel (10) comprises a first channel part (110) comprising the channel inlet (11), a second channel part (120), and a third channel part (130) comprising the channel outlet (12), wherein the second channel part (120) is in direct contact with the first channel part (110) and with the third channel part (130), wherein at least part of the first channel part (110) and at least part of the third channel part (130) is flexible, and wherein the channel (10) is configured to allow movement of the second channel part (120) relative to the channel inlet (11) and the channel outlet (12).

4. The system (1000) according to claim 3, wherein at least part of the first channel part (110) is configured parallel to at least part of the third channel part (130), especially wherein at least part of the second channel part (120) is configured perpendicular to said part of the first channel part (110) and to said part of the third channel part (130).

5. The system (1000) according to any of the claims 3-4, wherein the second channel part (120) comprises a first extreme (121), a second extreme (122) and a channel center (18), wherein the actuation system (450) is configured to let at least part of the second channel part (120) vibrate, wherein the first extreme (121) and the second extreme (122) displace temporarily around the channel center (18) along respectively a first displacement path (301) and a second displacement path (302), wherein a circumference of a circular plane (300), comprising the first and the second extreme (121,122) and a center (350) of the circular plane (300), comprises the first displacement path (301) and the second displacement path (302), and wherein a line perpendicular to the circular plane (300) and comprising the center (350) of the circular plane (300) comprises the channel center (18).

6. The system (1000) according to any one of the preceding claims 3-5, comprising a support (100) comprising the Coriolis-type flow measuring device (50), and a fluidic connection (500) configured to connect a fluid flow channel to the channel inlet (11), further comprising electrical connections (452), wherein the magnetic element (400) comprises a permanent magnet (405) and the electrical connections (452) are configured to connect the electrical track (451) to an electric source (455) providing an alternating current.

7. The system (1000) according to any one of the preceding claims, wherein the system comprises a micro fluidic device, wherein the Coriolis-type flow measuring device (50) is configured for measuring a property of a fluid in the micro fluidic device, wherein the property of the fluid is at least one property selected form the group consisting of a mass flow rate of the fluid and a density of the fluid.

8. The system (1000) according to any of the preceding claims , further comprising a displacement analyzer (460) configured to analyze a displacement of said at least part of the channel (10), wherein the displacement analyzer (460) comprises at least one analyzer from the group consisting of an optical or capacitive sensor, wherein the displacement analyzer (460) is configured to analyze a displacement (470) of at least part of the channel (10) at a first position (471) at the channel (10) and a displacement (480) of at least part of the channel at a second position (481) a of the channel (10).

9. The system (1000) according to claim 8, wherein the first position (471) comprises the center (18) and the second position (481) comprises an extreme (121,122).

10. A method for measuring a property of a fluid, wherein the property of the fluid is a property selected form the group consisting of a mass flow rate of the fluid and a density of the fluid, the method comprising:

    (i) providing a flow of the fluid to the channel inlet (11) of a flow measuring system (1000) according to any one of claims 8-9, to provide a Coriolis force induced displacement of at least part of the channel (10); and
    (ii) applying the actuation system (450) to provide an actuated displacement of at least part of the channel (10);
    (iii) analyzing a displacement, especially the Coriolis force induced displacement and/or the actuated displacement, of said part of the channel (10) to provide the property of the fluid.

11. The method according to claim 10, wherein the displacement analyzer (460) is configured to analyze a displacement (470) of at least part of the channel (10) at a first position (471) at the channel (10) and a displacement (480) of at least part of the channel at a second position (481) a of the channel (10), comprising:

(a) providing the flow of the fluid to the channel inlet (11) of the flow measuring device (50) and providing an alternating actuation current, comprising an alternating current frequency, to the electrical track (451) of a the flow measuring device (50), wherein the alternating current frequency is selected to provide a resonant frequency of the channel (10); and

(b) applying the displacement analyzer (460), to determine a mid-point amplitude (470) and an edge amplitude (480), wherein the mid-point amplitude (470) being a maximum displacement of the second channel part (120) at the first position (471) at the channel (10) along a line parallel to the circular plane (300), and the edge amplitude being a maximum displacement of second channel part (120) at the second position (481) of the channel (10) along a straight line parallel to the circular plane (300); and

(c) determining the property of the fluid on the basis of a ratio between the edge amplitude (470) and the mid-point amplitude (480).

12. Use of the flow measuring system (1000) according to any of the preceding claims 1-9, for measuring a mass flow rate and/or a density of a fluid flowing through the channel (10) in biomedical diagnostics and/or intravenous therapy.

13. A method for providing a flow measuring device (50) according to any of the preceding claims 1-9, the method comprising providing the polymer flow channel (10) by lithography, **characterised in that** the channel comprising device (1) is made of an epoxy based polymer, wherein the polymer (150) is SU-8 and wherein the method comprising SU-8 based technology.

14. The method for providing the flow measuring device (50) according to claim 13, the method comprising:

- providing a first layer comprising at least a polymer (150) on a first substrate;
- providing a pattern in the first layer by one or more photolithography steps;
- providing a second layer comprising at least a polymer (150) on a second substrate;
- providing a pattern in the second layer by photolithography;
- aligning the patterned first layer and patterned second layer to provide a channel (10);
- bonding the aligned layers to each other;
- removing the first substrate and the second substrate from the bonded and aligned layers to provide a micro-device; and
- depositing metal on the micro-device, wherein an electrical track (451) is provided at the channel (10).

15. The method for providing a flow measuring device (50) according to claim 13, the method comprising:

- providing a first layer comprising a polymer (150);
- depositing a patterned metal layer onto the first layer, providing a layer structure comprising a patterned conductive layer, wherein depositing the metal layer onto the first layer comprises one or more techniques selected from the group consisting of an evaporation deposition, a sputter deposition and a chemical vapor deposition, and wherein a pattern of the patterned metal layer is provided by applying a mask during depositing the metal layer or by applying lithography or etching after depositing the metal layer; and
- providing a third layer comprising a polymer at the layer structure, wherein a channel (10) is configured in the third layer.

**Patentansprüche**

1. System (1000), das eine Coriolis-Durchflussmessvorrichtung (50) umfasst, die (i) eine einen Kanal aufweisende Vorrichtung (1) und (ii) ein Betätigungssystem (450) umfasst, das dazu ausgelegt ist, mindestens einen Teil eines Kanals (10) vibrieren zu lassen, wodurch vorübergehende Verschiebungen verursacht werden, wobei die den Kanal aufweisende Vorrichtung (1) den Kanal (10) mit einer Kanalwand (15), einem Kanaleinlass (11) und einem Kanalauslass (12) umfasst, wobei die Kanalwand aus einem Polymer (150) hergestellt ist, wobei das Polymer (150) ein Polymer ist, das durch einen Vorgang unter Verwendung eines Fotolacks erhaltbar ist, wobei mindestens ein Teil des Kanals (10) relativ zu einem Rest der einen Kanal aufweisenden Vorrichtung (1) biegsam ausgelegt ist,
**dadurch gekennzeichnet, dass** das Polymer (150) ein Polymer auf Epoxidbasis ist und dass das Polymer (150) SU-8 ist.

2. System (1000) nach Anspruch 1, wobei die Kanalwand (15) eine Wanddicke (16) aufweist, der Kanal (10) eine Querschnittsfläche (17) aufweist, wobei die Querschnittsfläche (17) im Bereich von 100 $\mu$m$^2$ - 10 mm$^2$, insbesondere 100 $\mu$m$^2$ - 1 mm$^2$, ausgewählt ist, wobei die Querschnittsfläche (17) eine im Wesentlichen rechteckige Querschnittsfläche, insbesondere eine quadratische Querschnittsfläche, aufweist, wobei die Wanddicke (16) im Bereich von 1 -

500 μm ausgewählt ist.

**3.** System (1000) nach einem der vorhergehenden Ansprüche, wobei die Kanalwand (15) eine elektrische Leiterbahn (451) umfasst, die dazu ausgelegt ist, einen Wechselstrom im Kanal (10) fließen zu lassen, wobei die Durchflussmessvorrichtung (50) ferner ein magnetisches Element (400) umfasst, das dazu ausgelegt ist, ein Magnetfeld (410) parallel zu einer Ebene (200) bereitzustellen, die eine Kanalachse umfasst, und wobei das Betätigungssystem (450) die elektrische Leiterbahn (451) und das magnetische Element (400) umfasst, wobei der Kanal (10) einen ersten Kanalteil (110), der den Kanaleinlass (11) umfasst, einen zweiten Kanalteil (120) und einen dritten Kanalteil (130) umfasst, der den Kanalauslass (12) umfasst, wobei der zweite Kanalteil (120) in direktem Kontakt mit dem ersten Kanalteil (110) und mit dem dritten Kanalteil (130) steht, wobei mindestens ein Teil des ersten Kanalteils (110) und mindestens ein Teil des dritten Kanalteils (130) biegsam sind, und wobei der Kanal (10) dazu ausgelegt ist, eine Bewegung des zweiten Kanalteils (120) relativ zum Kanaleinlass (11) und zum Kanalauslass (12) zu ermöglichen.

**4.** System (1000) nach Anspruch 3, wobei mindestens ein Teil des ersten Kanalteils (110) parallel zu mindestens einem Teil des dritten Kanalteils (130) ausgelegt ist, insbesondere wobei mindestens ein Teil des zweiten Kanalteils (120) senkrecht zu dem Teil des ersten Kanalteils (110) und zu dem Teil des dritten Kanalteils (130) ausgelegt ist.

**5.** System (1000) nach einem der Ansprüche 3-4, wobei der zweite Kanalteil (120) ein erstes Ende (121), ein zweites Ende (122) und eine Kanalmitte (18) umfasst, wobei das Betätigungssystem (450) dazu ausgelegt ist, mindestens einen Teil des zweiten Kanalteils (120) vibrieren zu lassen, wobei sich das erste Ende (121) und das zweite Ende (122) vorübergehend um die Kanalmitte (18) entlang eines ersten Wegs (301) bzw. eines zweiten Wegs (302) verschieben, wobei ein Umfang einer Kreisebene (300), die das erste und das zweite Ende (121, 122) und ein Zentrum (350) der kreisförmigen Ebene (300) umfasst, den ersten Verschiebungsweg (301) und den zweiten Verschiebungsweg (302) umfasst, und wobei eine zu der Kreisebene (300) senkrechte Linie, die das Zentrum (350) der Kreisebene (300) umfasst, das Kanalzentrum (18) umfasst.

**6.** System (1000) nach einem der vorhergehenden Ansprüche 3-5, umfassend eine Halterung (100), die die Coriolis-Durchflussmessvorrichtung (50) umfasst, und eine Fluidverbindung (500), die dazu ausgelegt ist, einen Fluiddurchflusskanal mit dem Kanaleinlass (11) zu verbinden, ferner umfassend elektrische Anschlüsse (452), wobei das magnetische Element (400) einen Permanentmagneten (405) umfasst und die elektrischen Anschlüsse (452) dazu ausgelegt sind, die elektrische Leiterbahn (451) mit einer elektrischen Quelle (455) zu verbinden, die einen Wechselstrom liefert.

**7.** System (1000) nach einem der vorhergehenden Ansprüche, wobei das System eine mikrofluidische Vorrichtung umfasst, wobei die Coriolis-Durchflussmessvorrichtung (50) zum Messen einer Eigenschaft eines Fluids in der mikrofluidischen Vorrichtung ausgelegt ist, wobei die Eigenschaft des Fluids mindestens eine Eigenschaft ist, die aus der Gruppe ausgewählt ist, die aus einer Massendurchflussrate des Fluids und einer Dichte des Fluids besteht.

**8.** System (1000) nach einem der vorhergehenden Ansprüche, ferner umfassend einen Verschiebungsanalysator (460), der dazu ausgelegt ist, eine Verschiebung des mindestens einen Teils des Kanals (10) zu analysieren, wobei der Verschiebungsanalysator (460) mindestens einen Analysator aus der Gruppe umfasst, die aus einem optischen oder kapazitiven Sensor besteht, wobei der Verschiebungsanalysator (460) dazu ausgelegt ist, eine Verschiebung (470) mindestens eines Teils des Kanals (10) an einer ersten Position (471) an dem Kanal (10) und eine Verschiebung (480) mindestens eines Teils des Kanals an einer zweiten Position (481) des Kanals (10) zu analysieren.

**9.** System (1000) nach Anspruch 8, wobei die erste Position (471) das Zentrum (18) und die zweite Position (481) ein Ende (121, 122) umfasst.

**10.** Verfahren zum Messen einer Eigenschaft eines Fluids, wobei die Eigenschaft des Fluids eine Eigenschaft ist, die aus der Gruppe ausgewählt ist, die aus einer Massendurchflussrate des Fluids und einer Dichte des Fluids besteht, wobei das Verfahren umfasst:

(i) Bereitstellen eines Flusses des Fluids zum Kanaleinlass (11) eines Durchflussmesssystems (1000) nach einem der Ansprüche 8-9, um eine durch die Corioliskraft induzierte Verschiebung von mindestens einem Teil des Kanals (10) bereitzustellen; und
(ii) Anwenden des Betätigungssystems (450), um eine betätigte Verschiebung mindestens eines Teils des Kanals (10) zu bewirken;
(iii) Analysieren einer Verschiebung, insbesondere der durch die Corioliskraft induzierten Verschiebung und/oder der betätigten Verschiebung, des Teils des Kanals (10), um die Eigenschaft des Fluids bereitzustellen.

**11.** Verfahren nach Anspruch 10, wobei der Verschiebungsanalysator (460) dazu ausgelegt ist, eine Verschiebung (470) mindestens eines Teils des Kanals (10) an einer ersten Position (471) an dem Kanal (10) und eine Verschiebung (480) mindestens eines Teils des Kanals an einer zweiten Position (481) des Kanals (10) zu analysieren, umfassend:

(a) Bereitstellen des Flusses des Fluids an den Kanaleinlass (11) der Durchflussmessvorrichtung (50) und Bereitstellen eines Betätigungswechselstroms, der eine Wechselstromfrequenz aufweist, an die elektrische Leiterbahn (451) der Durchflussmessvorrichtung (50), wobei die Wechselstromfrequenz dazu ausgewählt ist, eine Resonanzfrequenz des Kanals (10) bereitzustellen; und

(b) Anwenden des Verschiebungsanalysators (460), um eine Mittelpunktsamplitude (470) und eine Randamplitude (480) zu bestimmen, wobei die Mittelpunktsamplitude (470) eine maximale Verschiebung des zweiten Kanalteils (120) an der ersten Position (471) am Kanal (10) entlang einer Linie parallel zur Kreisebene (300) ist und die Randamplitude eine maximale Verschiebung des zweiten Kanalteils (120) an der zweiten Position (481) des Kanals (10) entlang einer geraden Linie parallel zur Kreisebene (300) ist; und

(c) Bestimmen der Eigenschaft des Fluids basierend auf einem Verhältnis zwischen der Randamplitude (470) und der Mittelpunktsamplitude (480).

**12.** Verwendung des Durchflussmesssystems (1000) nach einem der vorhergehenden Ansprüche 1-9 zum Messen einer Massendurchflussrate und/oder einer Dichte eines durch den Kanal (10) fließenden Fluids bei der biomedizinischen Diagnostik und/oder intravenösen Therapie.

**13.** Verfahren zum Bereitstellen einer Durchflussmessvorrichtung (50) nach einem der vorhergehenden Ansprüche 1-9, wobei das Verfahren das Bereitstellen des Polymerdurchflusskanals (10) durch Lithografie umfasst, **dadurch gekennzeichnet, dass** die den Kanal aufweisende Vorrichtung (1) aus einem Polymer auf Epoxidbasis hergestellt ist, wobei das Polymer (150) SU-8 ist und wobei das Verfahren eine Technologie auf SU-8-Basis umfasst.

**14.** Verfahren zum Bereitstellen der Durchflussmessvorrichtung (50) nach Anspruch 13, wobei das Verfahren umfasst:

- Bereitstellen einer ersten Schicht, die mindestens ein Polymer (150) auf einem ersten Substrat umfasst;

- Bereitstellen eines Musters in der ersten Schicht durch einen oder mehrere Fotolithografieschritte;
- Bereitstellen einer zweiten Schicht, die mindestens ein Polymer (150) auf einem zweiten Substrat umfasst;
- Bereitstellen eines Musters in der zweiten Schicht durch Fotolithografie;
- Ausrichten der gemusterten ersten Schicht und der gemusterten zweiten Schicht, um einen Kanal bereitzustellen (10);
- Verkleben der ausgerichteten Schichten miteinander;
- Entfernen des ersten Substrats und des zweiten Substrats von den gebundenen und ausgerichteten Schichten, um eine Mikrovorrichtung bereitzustellen; und
- Abscheiden von Metall auf der Mikrovorrichtung, wobei eine elektrische Leiterbahn (451) an dem Kanal (10) bereitgestellt wird.

**15.** Verfahren zum Bereitstellen einer Durchflussmessvorrichtung (50) nach Anspruch 13, wobei das Verfahren umfasst:

- Bereitstellen einer ersten Schicht, die mindestens ein Polymer (150) umfasst;
- Abscheiden einer gemusterten Metallschicht auf der ersten Schicht, wobei eine Schichtstruktur bereitgestellt wird, die eine gemusterte leitfähige Schicht umfasst, wobei das Abscheiden der Metallschicht auf der ersten Schicht eine oder mehrere Techniken umfasst, die aus der Gruppe ausgewählt sind, die aus einer Aufdampfabscheidung, einer Zerstäubungsabscheidung und einer chemischen Dampfabscheidung besteht, und wobei ein Muster der gemusterten Metallschicht durch Anwenden einer Maske während des Abscheidens der Metallschicht oder durch Anwenden von Lithografie oder Ätzen nach dem Abscheiden der Metallschicht bereitgestellt wird; und
- Bereitstellen einer dritten Schicht, die ein Polymer an der Schichtstruktur umfasst, wobei ein Kanal (10) in der dritten Schicht ausgelegt wird.

**Revendications**

**1.** Système (1000) comprenant un débitmètre (50) à effet Coriolis comprenant (i) un dispositif (1) comprenant un canal et (ii) un système d'actionnement (450) configuré pour laisser vibrer au moins une partie d'un canal (10), provoquant de ce fait des déplacements temporaires,
dans lequel le dispositif (1) comprenant un canal comprend le canal (10) ayant une paroi (15) de canal, une entrée (11) de canal et une sortie (12) de canal,

dans lequel la paroi de canal est faite d'un polymère (150),

dans lequel le polymère (150) est un polymère pouvant être obtenu par un processus utilisant une résine photosensible,

dans lequel au moins une partie du canal (10) est configurée pour pouvoir fléchir par rapport à un reste du dispositif (1) comprenant un canal, **caractérisé en ce que** le polymère (150) est un polymère à base d'époxydes et **en ce que** le polymère (150) est du SU-8.

2. Système (1000) selon la revendication 1, dans lequel la paroi (15) de canal comporte une épaisseur (16) de paroi, le canal (10) présente une section transversale (17),

dans lequel la section transversale (17) est choisie dans une plage de 100 $\mu$m$^2$ à 10 mm$^2$, en particulier 100 $\mu$m$^2$ à 1 mm$^2$,

dans lequel la section transversale (17) présente une section transversale sensiblement rectangulaire, en particulier une section transversale carrée,

dans lequel l'épaisseur (16) de paroi est choisie dans une plage de 1 à 500 $\mu$m.

3. Système (1000) selon l'une quelconque des revendications précédentes, dans lequel la paroi (15) de canal comprend une piste électrique (451) configurée pour permettre à un courant alternatif de circuler au niveau du canal (10),

dans lequel le débitmètre (50) comprend en outre un élément magnétique (400) configuré pour produire un champ magnétique (410) parallèle à un plan (200) comprenant un axe du canal, et

dans lequel le système d'actionnement (450) comprend la piste électrique (451) et l'élément magnétique (400), dans lequel le canal (10) comprend une première partie (110) de canal comprenant l'entrée (11) de canal, une deuxième partie (120) de canal et une troisième partie (130) de canal comprenant la sortie (12) de canal, dans lequel la deuxième partie (120) de canal est en contact direct avec la première partie (110) de canal et avec la troisième partie (130) de canal,

dans lequel au moins une partie de la première partie (110) de canal et au moins une partie de la troisième partie (130) de canal sont flexibles, et

dans lequel le canal (10) est configuré pour permettre un mouvement de la deuxième partie (120) de canal par rapport à l'entrée (11) de canal et à la sortie (12) de canal.

4. Système (1000) selon la revendication 3, dans lequel au moins une partie de la première partie (110) de canal est configurée parallèle à au moins une partie de la troisième partie (130) de canal, en particulier dans lequel au moins une partie de la deuxième partie (120) de canal est configurée perpendiculaire à ladite partie de la première partie (110) de canal et à ladite partie de la troisième partie (130) de canal.

5. Système (1000) selon la revendication 3 ou 4, dans lequel la deuxième partie (120) de canal comprend une première extrémité (121), une seconde extrémité (122) et un centre (18) de canal,

dans lequel le système d'actionnement (450) est configuré pour laisser vibrer au moins une partie de la deuxième partie (120) de canal,

dans lequel la première extrémité (121) et la seconde extrémité (122) se déplacent temporairement autour du centre (18) de canal suivant respectivement un premier trajet (301) de déplacement et un second trajet (302) de déplacement,

dans lequel la circonférence d'un plan circulaire (300), comprenant la première et la seconde extrémité (121, 122) et un centre (350) du plan circulaire (300), comprend le premier trajet (301) de déplacement et le second trajet (302) de déplacement, et dans lequel une ligne perpendiculaire au plan circulaire (300) et comprenant le centre (350) du plan circulaire (300) comprend le centre (18) du canal.

6. Système (1000) selon l'une quelconque des revendications 3 à 5 précédentes, dans lequel un support (100) comprenant le débitmètre (50) à effet Coriolis et une connexion fluidique (500) configurée pour raccorder un canal d'écoulement de fluide à l'entrée (11) de canal,

comprenant en outre des connexions électriques (452), dans lequel l'élément magnétique (400) comprend un aimant permanent (405) et les connexions électriques (452) sont configurées pour raccorder la piste électrique (451) à une source électrique (455) fournissant un courant alternatif.

7. Système (1000) selon l'une quelconque des revendications précédentes, dans lequel le système comprend un dispositif micro-fluidique,

dans lequel le débitmètre (50) à effet Coriolis est configuré pour mesurer une propriété d'un fluide dans le dispositif micro-fluidique,

dans lequel la propriété du fluide est au moins une propriété choisie dans le groupe constitué par le débit massique du fluide et la densité du fluide.

8. Système (1000) selon l'une quelconque des revendications précédentes, comprenant en outre un analyseur de déplacement (460) configuré pour analyser le déplacement de ladite partie du canal (10),

dans lequel l'analyseur de déplacement (460) comprend au moins un analyseur du groupe constitué par un capteur optique et un capteur capacitif,

dans lequel l'analyseur de déplacement (460) est configuré pour analyser le déplacement (470) d'au moins une partie du canal (10) au niveau d'une première position (471) du canal (10) et le déplacement (480) d'au moins une partie du canal au niveau d'une seconde position (481) du canal (10).

9. Système (1000) selon la revendication 8, dans lequel la première position (471) comprend le centre (18) et la seconde position (481) comprend une extrémité (121, 122).

10. Procédé de mesure d'une propriété d'un fluide, dans lequel la propriété du fluide est une propriété choisie dans le groupe constitué par le débit massique du fluide et la densité du fluide, le procédé comprenant les opérations consistant à :

   (i) assurer un écoulement du fluide vers l'entrée (11) de canal d'un système (1000) de débitmétrie selon la revendication 8 ou 9, pour produire un déplacement induit par une force de Coriolis d'au moins une partie du canal (10) ; et
   (ii) appliquer le système d'actionnement (450) pour produire un déplacement actionné d'au moins une partie du canal (10) ;
   (iii) analyser le déplacement, en particulier le déplacement induit par une force de Coriolis et/ou le déplacement actionné, de ladite partie du canal (10) pour procurer la propriété du fluide.

11. Procédé selon la revendication 10, dans lequel l'analyseur de déplacement (460) est configuré pour analyser le déplacement (470) d'au moins une partie du canal (10) au niveau d'une première position (471) du canal (10) et le déplacement (480) d'au moins une partie du canal au niveau d'une seconde position (481) du canal (10), comprenant les opérations consistant à :

   (a) assurer l'écoulement du fluide vers l'entrée (11) de canal du débitmètre (50) et fournir un courant alternatif d'actionnement, présentant une fréquence de courant alternatif, à la piste électrique (451) du débitmètre (50),
   dans lequel on choisit la fréquence de courant alternatif pour fournir une fréquence de résonance du canal (10) ; et
   (b) appliquer l'analyseur de déplacement (460), pour déterminer une amplitude de point médian (470) et une amplitude de bord (480),
   dans lequel l'amplitude de point médian (470) est un déplacement maximal de la seconde partie (120) de canal au niveau de la première position (471) du canal (10) le long d'une ligne parallèle au plan circulaire (300), et l'amplitude de bord est un déplacement maximal de la seconde partie (120) de canal au niveau de la seconde position (481) du canal (10) le long d'une ligne droite parallèle au plan circulaire (300) ; et
   (c) déterminer la propriété du fluide sur la base du rapport entre l'amplitude de bord (480) et l'amplitude de point médian (470).

12. Utilisation du système (1000) de débitmétrie selon l'une quelconque des revendications 1 à 9 précédentes, pour mesurer un débit massique et/ou une densité d'un fluide s'écoulant à travers le canal (10) dans des diagnostics biomédicaux et/ou une thérapie intraveineuse.

13. Procédé de production d'un débitmètre (50) selon l'une quelconque des revendications 1 à 9 précédentes, le procédé comprenant la production du canal (10) d'écoulement en polymère par lithographie, **caractérisé en ce que** le dispositif (1) comprenant un canal est constitué d'un polymère à base d'époxydes, dans lequel le polymère (150) est du SU-8 et dans lequel le procédé comprend une technologie à base de SU-8.

14. Procédé de production du débitmètre (50) selon la revendication 13, le procédé comprenant les opérations consistant à :

   - produire une première couche comprenant au moins un polymère (150) sur un premier substrat ;
   - produire un motif dans la première couche par une ou plusieurs étapes de photolithographie ;
   - produire une deuxième couche comprenant au moins un polymère (150) sur un second substrat ;
   - produire un motif dans la deuxième couche par photolithographie ;
   - aligner la première couche à motifs et la deuxième couche à motifs pour fournir un canal (10) ;
   - coller l'une à l'autre les couches alignées ;
   - retirer le premier substrat et le second substrat des couches alignées et collées pour fournir un micro-dispositif ; et
   - déposer du métal sur le micro-dispositif, dans lequel une piste électrique (451) est disposée au niveau du canal (10).

15. Procédé de production du débitmètre (50) selon la revendication 13, le procédé comprenant les opérations consistant à :

   - produire une première couche comprenant un polymère (150) ;
   - déposer une couche métallique à motifs sur la première couche, ce qui produit une structure de couche comprenant une couche conductrice à motifs,
   dans lequel le dépôt de la couche métallique sur la première couche comprend une ou plusieurs techniques choisies dans le groupe constitué par dépôt par évaporation, dépôt par pulvérisation cathodique et dépôt chimique sous vide, et

dans lequel on produit un motif de la couche métallique à motifs en appliquant un masque pendant le dépôt de la couche métallique ou en appliquant une lithographie ou une gravure après le dépôt de la couche métallique ; et
- produire une troisième couche comprenant un polymère au niveau de la structure de couche, dans lequel un canal (10) est configuré dans la troisième couche.

**FIG. 1**

**FIG. 2**

**FIG. 3**

FIG. 4A

FIG. 4B

FIG. 4C

FIG. 5

**FIG. 6**

**FIG. 7**

FIG. 8

FIG. 9

FIG. 10

FIG. 11

FIG. 12

FIG. 13A

FIG. 13B

FIG. 14A

FIG. 14B

FIG. 14C

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2016363472 A
- US 20090075129 A

**Non-patent literature cited in the description**

- **J. HANELVELD et al.** *MEMS 2009, IEEE 22nd International conference on Micro Electro Mechanical Systems,* 2009
- **J. GROENESTEIJN et al.** *Journal of applied Physics,* 2014, vol. 115, 194503
- **J. HANEVELD et al.** *J. Micromech. Microeng.,* 2010, vol. 20, 125001
- **J. GROENESTEIJN et al.** *Thirteenth IEEE Sensors Conference,* 03 November 2014, 954-957